# EUROPEAN PATENT APPLICATION

(11) **EP 1 418 757 A1**
(43) Date of publication of application: **12.05.2004**
(21) Application number: 02751712.7
(22) Date of filing: 26.07.2002
(51) Int. Cl.: H04N 7/173

(54) **CONTENT PROVIDING APPARATUS, CONTENT PROVIDING METHOD, STREAM CONTENT REPRODUCTION PROGRAM, AND RECORDING MEDIUM CONTAINING THE STREAM CONTENT REPRODUCTION PROGRAM**

(30) Priority: 15.08.2001 JP 2001246349
(71) Applicant: Sony Corporation, Tokyo 141-0001 (JP)
(72) Inventor: WATANABE, Koichiro, c/o SONY CORPORATION, Shinagawa-ku, Tokyo 141-0001 (JP)
(74) Representative: Thévenet, Jean-Bruno
(86) International application number: PCT/JP2002/007588
(87) International publication number: WO 2003/017669

(57) **Abstract**

The present invention is adopted to the case where music and movie are distributed through the internet, informs time information (15) to a transmission target 12 of stream contents, watches a playback condition of a part specified by at least this time information (15), and makes it possible to carry out a playback of the following stream contents.

## Description

### BACKGROUND OF THE INVENTION

### TECHNICAL FIELD

The present invention relates to a contents providing apparatus, a contents providing method, a playback program for stream contents, and a recording medium on which a playback program for stream contents is recorded, and is able to apply to the case where music and video are distributed through the internet, for example. The present invention notifies time information to a transmission target of the stream contents, watches a playback condition of a part specified at least by the time information, and only in the case when the operation at a reception side is done as intended by a distribution side, the playback for the following stream contents is set to be available, and accordingly, it is able to reflect the intention of the distribution side to an operation of the reception side.

### BACKGROUND ART

Conventionally, in a distribution of information such as music, movie, and the like where contents change by a lapse of time (it is referred to as stream contents here-in-after), one stream content including a plurality of continuing stream contents is to be presented by sequentially presenting the plurality of stream contents as necessary.

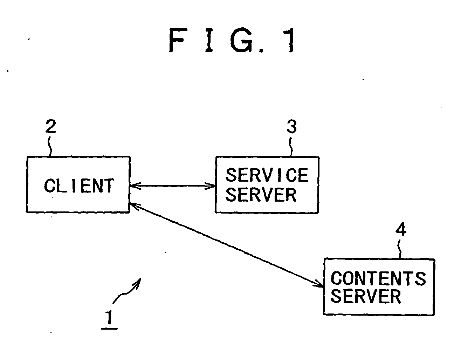

Fig. 1 is a block diagram showing a distribution system related to such distribution method. In this distribution system 1, a client terminal 2 is a computer connected to a network such as the internet or the like, and is a receiving apparatus for the contents. A service server 3 functions as an Http server, and executes introductions or the like of the contents that are available for provision by accessing from the client terminal 2. The contents server 4 provides the contents by accessing from the similar client terminal 2.

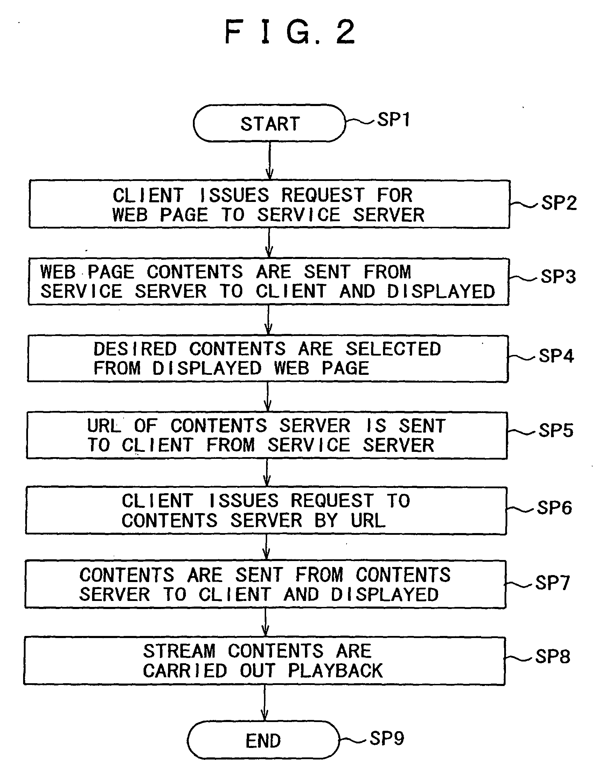

In such distribution system 1, as shown in Fig. 2, by accessing the service server 3 from the client terminal 2, the processing proceeds from a step SP1 to a step SP2, and a request for a web page from the client terminal 2 is accepted by the service server 3. Based on this request, in a following step SP3, the service server 3 transmits web page contents introducing the stream contents available for provision, and the client terminal 2 displays the web page contents by a browser.

Further, in this distribution system 1, in a step SP4, user desired stream contents are selected by selection of a user in this web page contents, and in a succeeding step SP5, the corresponding URL of the contents server 4 is notified from the service server 3 by the selection of this user.

Further in a succeeding step SP6, the request by this URL is notified from the client terminal 2 to the contents server 4, and in a succeeding step SP7, provision of the contents is started from the contents server 4. Further in a succeeding step SP8, a playback of the stream contents is started, the processing proceeds to step SP9, and the this processing procedure ends. Thereby, in the distribution system 1 of this kind, the user desired stream contents are set to be provided.

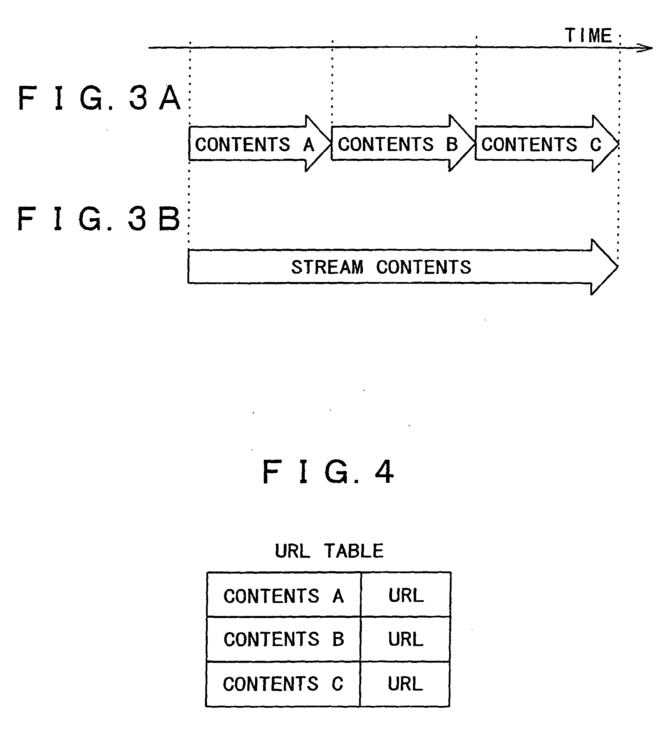

On the contrary as shown in Fig. 3, in a distribution of stream contents, there is also a case where one stream content (Fig. 3B) is divided by a time sequence into plural stream contents (Fig. 3A), and one content is distributed by sequentially distributing thus obtained plural contents A, B, and C.

In this case, in the service server 3, the URL of each content A, B, and C are recorded to form an URL table as shown in Fig. 4, and by retrieving the URL table and providing the corresponding URL to the client terminal 2, these continuing contents A, B, and C are set to be able to be sequentially provided to a user.

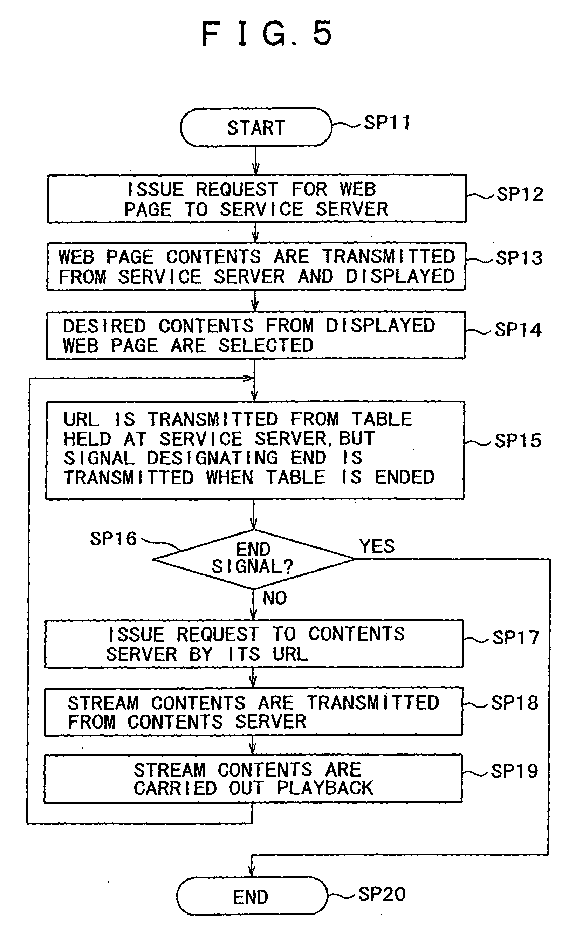

In other words, as shown in Fig. 5, in this case, in the distribution system 1, by the access of the service server 3 from the client terminal 2, the processing proceeds from a step SP11 to a step SP12, and the request for the web page from the client terminal 2 is accepted by the service server 3. By this request, in a continuing step SP13, the service server 3 issues web page contents introducing the contents that are available for provision, and in the client terminal 2, this web page contents are displayed by a browser.

Subsequently in this distribution system 1, in a step SP14, user desired contents are selected in this web page contents by the selection of a user, and in a continuing step SP15, the corresponding URL of the contents server 4 is notified from the service server 3 by this selection of a user. In this case, the service server 3 notifies the URL of the contents corresponding to the access in accordance with the record of the URL among URLs of continuing plural contents. In addition, by repetition of accessing, the signal indicating the end is issued for the access after notifying the URL of the last content.

Thereby, in a continuing step SP16, the client terminal 2 determines whether the signal of the end from the service server 3 is acquired or not, and when a negation result is acquired here, the processing proceeds to a step SP17. Here, the client terminal 2 requests the insurance of stream contents by accessing the contents server 4 with the URL notified from the service server 3, and receives the stream contents transmitted from the contents server 4 in a step SP18 followed by this request. Further in a continuing step SP19, it carries out a playback of thus received stream contents, and when the playback is completed, the processing returns to the step SP15.

Thereby, in this distribution system 1, the processing procedure of the steps SP15-SP16-SP17-SP18-SP19-SP15 is repeated at every consecutive stream contents A, B, and C, and when the playback of all the stream contents are finished, then an affirmation result is acquired in the continuing step SP16 by issuing the signal of the end in the step SP15, the processing proceeds to a step SP20, and this processing procedure ends.

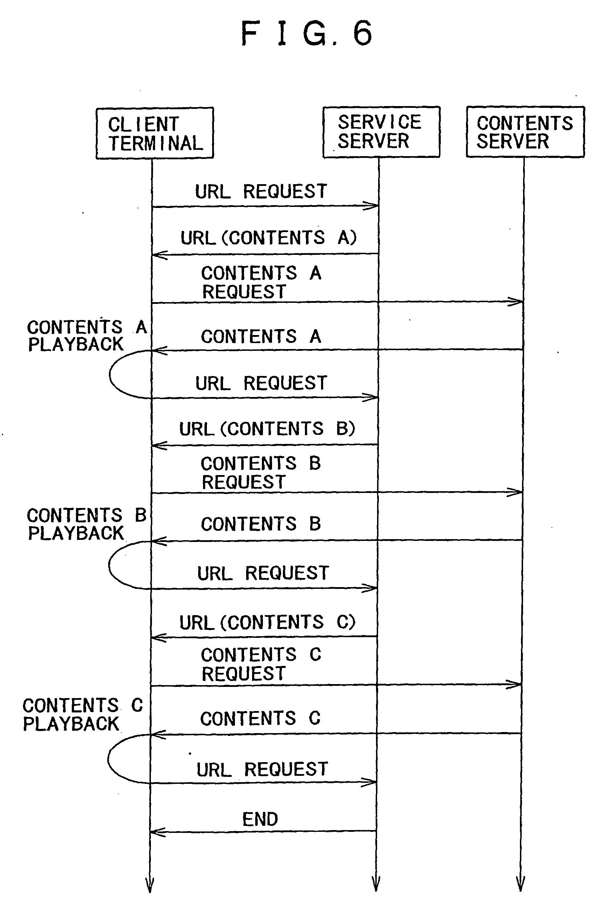

Thereby, in the client terminal 2 as shown in Fig. 6, the stream contents divided into plural are to be continuously carried out the playback by repeating a request for the URL to the service server 3 and contents request by the URL obtained as the result to contents server 4.

Resultantly, the distribution of the stream contents shown in Fig. 5 and Fig. 6 is the case where, in the reception side, the stream contents are distributed by the stream distribution which provides the stream contents to a user by decoding while receiving. In the distribution of the stream contents, opposite to this, there is the case where, in the reception side, the stream contents are distributed by the buffering distribution which distributes to a user after buffering all the data of the contents. Fig. 7 is a flow chart showing the processing procedure by this buffering distribution.

In other words, in the distribution system by the buffering distribution, by the access of the service server 3 from similar client terminal 2, the processing proceeds from a step SP21 to a step SP22, a request for the web page from the client terminal 2 is accepted by the service server 3. Further by this request, in a continuing step SP23, the service server 3 issues web page contents for introducing the contents that are available for provision, and in the client terminal 2, this web page contents are displayed by the browser.

Further in this distribution system 1, in a step SP24, user desired contents are selected in accordance with the selection in the web page contents by the user, and in a continuing step SP25, the URL table in the contents server 4 is notified from the service server 3 by the selection by the user.

In the distribution system, in a continuing step SP26, the distribution of the stream contents are requested from the client terminal 2 with this URL table to the contents server 4, and in a continuing step SP27, all of the stream contents constructing one content are downloaded into the client terminal 2.

Furthermore, in a continuing step SP28, an authorization for playback of the stream contents is requested to the service server 3, and in a continuing step SP29, it is determined whether it is authorized or not. When an affirmation result is obtained, the processing proceeds to a step SP30, the playback for the stream contents is started at the client terminal 2, and when the playback of one stream content is completed, then in a step SP31, it is determined whether the playback of one content is completed or not. When a negation result is obtained here, the processing proceeds from a step SP31 back to the step SP28, and an authorization for playback is requested with regard to following stream contents to the service server 3.

Thereby in this case, after all of the stream contents are once carried out the buffering by downloading, with the authorization of the service server 3, continuing stream contents are carried out the playback, and when the playback of all of the stream contents is completed, then, the processing proceeds from the step SP31 to a step SP32, and this processing procedure ends. In addition, when the playback is not authorized in any stream content by an untreated charging and the like, the processing proceeds from the step SP29 to the step SP32, and the playback of the stream contents is stopped.

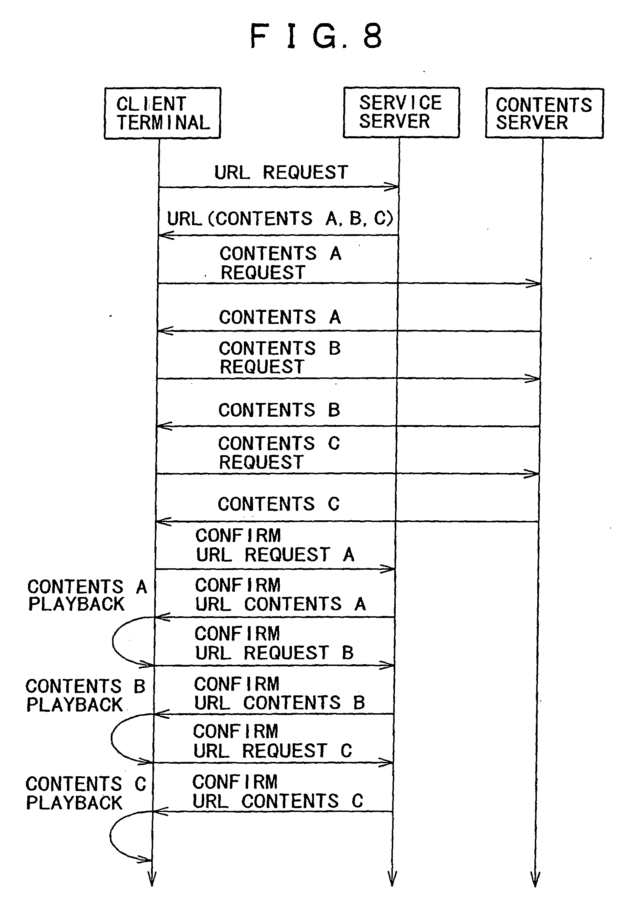

Thereby, in the case of such buffering distribution, as shown in Fig. 8, all of the stream contents are sequentially carried out the playback with the authorization of the service server 3 after buffering once.

By the way, in the distribution of the stream contents of this kind, it is thought that extremely important information is distributed by burring in one part of the stream contents, and it is tried to keep every one informed such important information. However, conventionally in the distribution system, it is entrusted to the operation of a user, so that it is thought that the part to which the important information is buried is carried out the playback by the fast-forward in spite of the intention of such transmission side.

If it is able to reflect the intention of the distribution side to the operation of the reception side, it is thought that the usability of the system of this kind can be improved more remarkably.

### DISCLOSURE OF THE INVENTION

The present invention is done in consideration of the above-mentioned point to propose a contents providing apparatus that is able to reflect an intention of a distribution side to an operation of a reception side, a contents providing method, a playback program for the stream contents, and a recording medium on which a playback program for stream contents is recorded.

In order to solve the above-mentioned problems, the present invention is applied to a contents providing apparatus which makes it available to provide the stream contents to a client terminal depending on a request from the client terminal, and notifies time information of a part to which important information is assigned in the stream contents.

According to the construction of the present invention, by applying to a contents providing apparatus that is able to provide the stream contents to the client terminal depending on a request from the client terminal, and by notifying the time information to which the important information is assigned in the stream contents to the client terminal, it is able to execute the processing such as making difficult of a playback of following contents and the like without carrying out the playback this part with a normal playback speed by this time information in the client terminal side and thereby, the intention of the distribution side is able to be reflected to the operation of the reception side.

In addition, the present invention is applied to a contents providing apparatus for receiving the stream contents transmitted from a predetermined server, and providing to a user by carrying out the playback of this stream contents, watches the playback condition of the predetermined part specified by the time information transmitted from the server, at least, and stops the playback of following stream contents based on the playback condition.

According to the construction of the present invention, it is applied to a contents providing apparatus for receiving the stream contents transmitted from the predetermined server, and providing to a user by carrying out the playback of this stream contents, watches the playback condition of the predetermined part specified by the time information notified from the server, at least, and stops the playback of following stream contents based on the playback condition, therefore, if this part is not carried out the playback with a normal playback speed, it is able to make difficult the playback of following stream contents, and thereby, it is able to reflect the intention of distribution side to the operation of the reception side.

In addition, the present invention is applied to a contents providing method that makes possible to provide stream contents to a client terminal in response to a request from the client terminal, and notifies time information to which important information is assigned in the stream contents to the client terminal.

Thereby, according to the construction of the present invention, it is able to present the contents providing method that is able to reflect the intention of the distribution side to the operation of the reception side.

In addition, the present invention is applied to a contents providing method for receiving stream contents transmitted from a predetermined server, and providing the stream contents to a user by carrying out a playback, watches the playback condition of a predetermined part of the stream contents specified by time information transmitted from the server, at least, and stops the playback of following stream contents based on the playback condition.

Thereby, according to the construction of the present invention, it is able to present a contents providing method that is able to reflect the intention of the distribution side to the operation of the reception side.

In addition, the present invention is applied to a playback program for stream contents for distributing the stream contents received from a predetermined server by carrying out a playback, watches the playback condition of the part of the stream contents specified by the time information notified from the server, at least, and makes the playback difficult for following stream contents based on the playback condition.

Thereby, according to the construction of the present invention, it is able to provide a playback program for stream contents that is able to reflect the intention of the distribution side to the operation of the reception side.

In addition, the present invention is applied to a recording medium on which a playback program for stream contents that is received from a predetermined server and is provided by carrying out the playback the stream contents, and this playback program for the stream contents watches the playback condition of a predetermined part of the stream contents specified by time information notified from a server, and set to make difficult a playback of following stream contents based on the playback condition.

As described above, according to the construction of the present invention, it is able to present a recording medium on which a playback program for the stream contents is recorded capable of reflecting the intention of the distribution side to the operation of the reception side.

### BRIEF DESCRIPTION OF THE DRAWINGS

Fig. 1 is a block diagram showing a conventional distribution system;
Fig. 2 is a flow chart to be offered in explanation of operation of the distribution system in Fig. 1;
Fig. 3 is a time chart showing a case where one stream content is distributed by the plural stream contents;
Fig. 4 is a chart showing an URL table of the stream contents of Fig. 3;
Fig. 5 is a flow chart to be offered in explanation of operation of the distribution system for the stream contents in Fig. 3;
Fig. 6 is a time chart corresponding to the operation of Fig. 5;

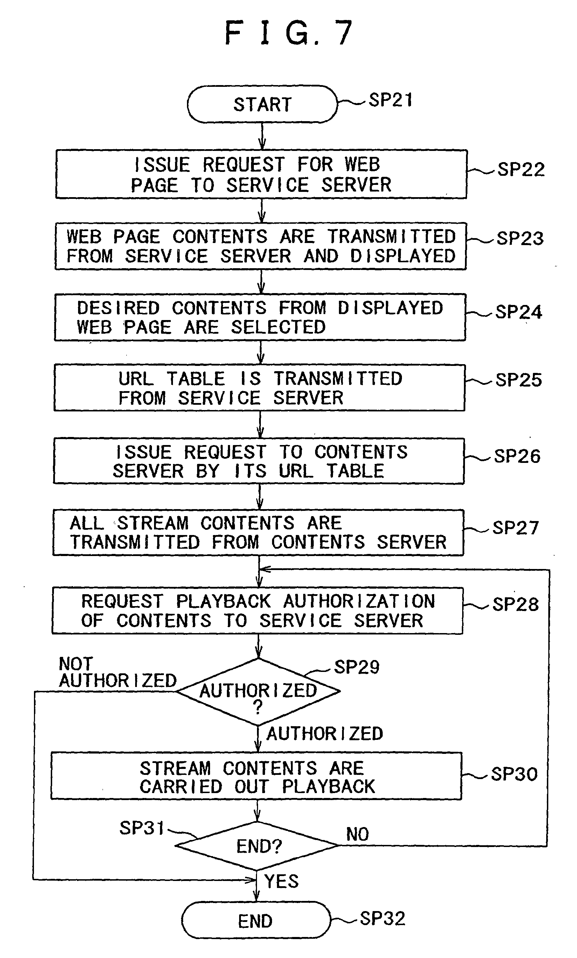

Fig. 7 is a flow chart to be offered in explanation of the operation when one content comprising the plural stream contents is carried out by a buffering distribution;
Fig. 8 is a time chart corresponding to the operation of Fig. 7;

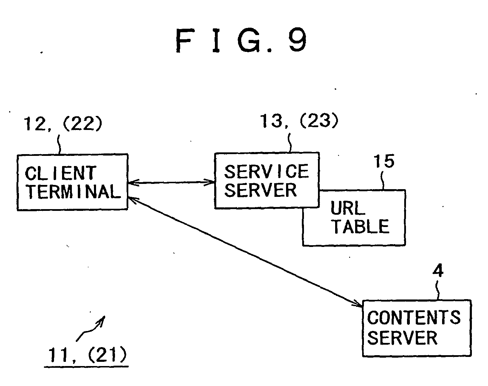

Fig. 9 is a block diagram showing the distribution system related to the first embodiment of the present invention;

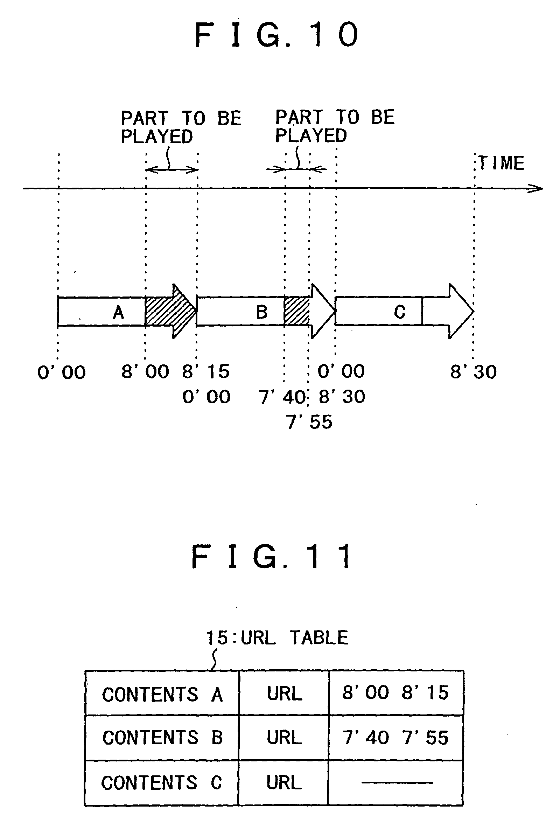

Fig. 10 is a time chart showing the stream contents distributed by the distribution system of Fig. 9;
Fig. 11 is a chart showing an URL table of the stream contents of Fig. 10;

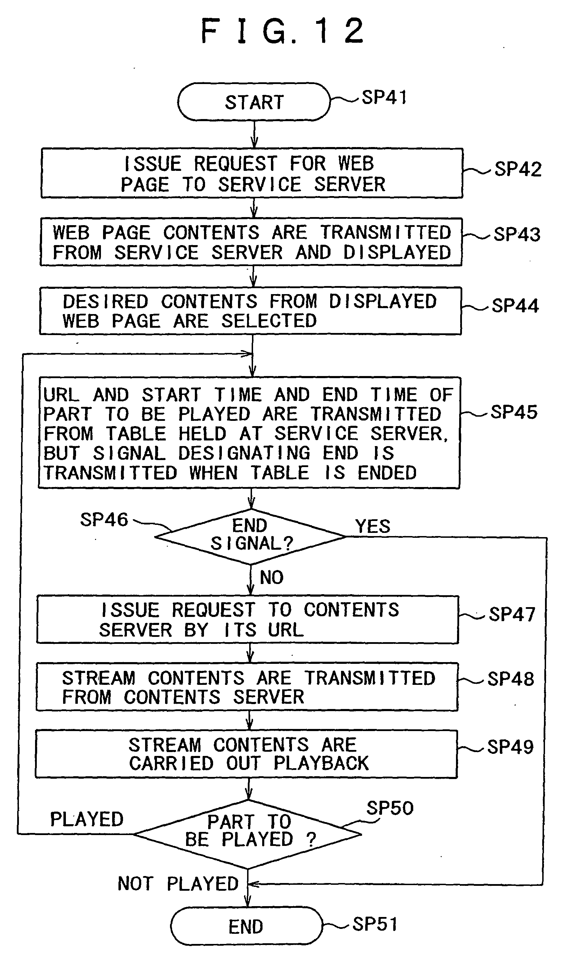

Fig. 12 is a flow chart to be offered in explanation of the operation of the distribution system in Fig. 9; and

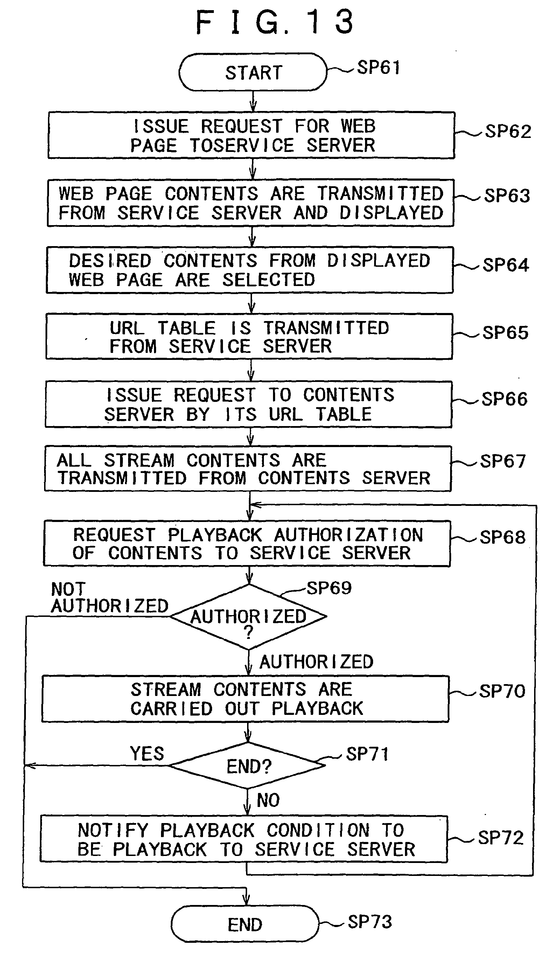

Fig. 13 is a flow chart to be offered in explanation of the operation of the distribution system related to the second embodiment of the present invention.

### BEST MODE FOR CARRYING OUT THE INVENTION

An embodiment of the present invention is explained in detail with reference to the accompanying drawings appropriately here-in-after.

### (1) First embodiment:

### (1 - 1) Construction of the first embodiment:

Fig. 9 is a block diagram showing a distribution system related to an embodiment of the present invention. In this distribution system 11, stream contents are distributed by a stream distribution.

In this distribution system 11, a service server 13 provides web page contents by accessing from a client terminal 12, further accesses an URL table by accessing by this web page contents, and provides the URL of a contents server 4. Thereby, the service server 13 is so arranged to notify the URL that user desired stream contents are available for acquisition.

When notifying this URL, the service server 13 also notifies to the client terminal 12 the time information indicating start position and end position of a part to which important information is assigned. Here, this time information is set to every stream content with reference to the time code that is the time information of the stream contents.

Namely as shown in Fig. 10, in the case where one content is distributed as a sequences of three stream contents A, B, and C, the URL table 15 is, as shown in Fig. 11, constructed by recording URLs of every stream content A, B, and C. In addition, when, among these stream contents A, B, C, the important information is assigned to a range from 8 minutes 00 seconds to 8 minutes 15 seconds of the first stream content A, and a range from 7 minutes 40 seconds to 7 minutes 55 seconds of the second stream content B, the URL table 15 is set to be recorded the start time and the end time for these ranges corresponding to the stream content B and the stream content C, respectively.

As described above, in this embodiment, the service server 13 notifies an address to be accessed regarding respective stream content constructing user desired contents depending on the access from the client terminal 12, and further, is set to notify recording positions of the important information assigned to each stream content with the time information of the stream contents. In this case, in the embodiment, such important information is a commercial.

Corresponding to this, the client terminal 12 acquires the web page contents by accessing the service server 13 with a predetermined browser software, and further acquires the URL and the time information by accessing the service server 13 with this web page contents. Further it down-loads the stream contents by accessing the contents server 4 with this URL, and carries out the playback of this stream contents by the playback application which is a plug-in software of this browser software.

In this processing, the client terminal 12 watches the playback condition of the stream contents with the playback application based on the time information acquired from the service server 13, and notifies the completion of correct processing based on the playback application only in the case when the playback processing by the standard speed is executed regarding the important information specified by this time information, and thereby, authorizes the accessing of the server for acquiring the URL of the stream contents which is followed after this.

Thereby, in this distribution system 11, when the processing such as fast-forward, skip, and the like is executed regarding the specified part set by the distribution side, it is set not to carry out the down-loading of the following stream contents, and only in the case when this specified part is carried out the correct playback, it is set to be able to carry out the down-loading of the following stream contents, and thereby, it is set to keep everyone informed about the important information set at the distribution side by reflecting the intention of the distribution side to the operation of the reception side.

Namely, Fig. 12 is a flow chart showing a processing procedure of the stream contents in this client terminal 12. By the execution of the web browser, and further by the execution of the playback application which is down-loaded and activated, the client terminal 12 executes this processing procedure.

In other words, in this the distribution system 11, the processing proceeds from a step SP41 to a step SP42 by accessing the service server 13 from the client terminal 12, and a request of the web page from the client terminal 12 is accepted by the service server 13. By this request, in a following step SP43, the service server 13 issues the web page contents introducing the contents available for provision, and the client terminal 12 displays this web page contents with the browser.

Further in this the distribution system 11, in a step SP44, the user desired contents are selected by the selection on the user in this web page contents, and in a continuing step SP45, the corresponding URL of the contents server 4 is notified from the service server 13 by the access from the client terminal 12 based on the selection by the user. In this case, the service server 13 also notifies the time information to which the important information is recorded from the record of the URL table. Further by repeating the access, it sequentially notifies URL and time information of the continuing stream contents, and end signal indicating the end is issued to the access after notifying the URL of the last contents and the time information.

In a following step SP46, the client terminal 12 determines whether the end signal from the service server 13 is obtained or not, and when a negation result is provided here, the processing proceeds to a step SP47. Here, the client terminal 12 requests the transmission of the stream contents by accessing the contents server 4 with the URL notified from the service server 13, and receives the stream contents transmitted from the contents server 4 in a step SP48 which is followed after this request. In addition, in a continuing step SP49, it carries out the playback of thus received stream contents, and when the playback is completed up to the end of the stream contents, the processing proceeds to a step SP50.

In this step SP50, the client terminal 12 determines whether the time information is simultaneously acquired with the URL or not. Further in the case when the time information is acquired, it determines whether the part specified by the time information is carried out the playback with a standard playback speed or not. In this case, when this important part is carried out the playback with the standard playback speed, the client terminal 12 returns to the step SP45, and acquires a URL and time information of following stream contents, but when it does not carry out the playback of this important part with the standard playback speed, namely does carry out the playback of this important part with fast-forward or skip, then, the processing proceeds from the step SP 50 to a step SP51, and the processing procedure ends.

In addition, similarly the playback of the all stream contents is completed, and the end signal is obtained from the service server 13, then the processing proceeds from the step SP46 to the step SP51 because a negation result is provided in the step SP46, and this processing procedure ends.

Thereby, the client terminal 12 is set to carry out the playback by acquiring following stream contents only in the case when the part specified by the distribution side is carried out the playback in accordance with the intention of the distribution side, but if the processing intended by the distribution side is not executed, then the acquisition of a following stream content is stopped and the processing is set to end.

### (1 - 2) Operation of the first embodiment

In the above mentioned construction, in this distribution system 11 (Fig. 9), a list of the contents available for provision is distributed by the access of the service server 13 from the client terminal 12, the URL of the corresponding stream content is obtained by accessing the service server 13 by the selection of the user in this list. Further by the access of the contents server 4 with this URL, the corresponding stream content is down-loaded to the client terminal 12, and thereby, it is able to provide the user desired contents by way of the client terminal 12.

In this the distribution system 11, a plurality of stream contents are formed by dividing one content time-sequentially (Fig. 10), and these stream contents are respectively provided by the stream distribution. Further, in the client terminal 12, when the playback of the one stream contents is completed by providing to the user while receiving these stream contents and decoding, the URL of a following content is obtained by accessing the service server 13, and by repeating this processing, it provides a continuous plural stream contents to the user and the one contents of these plural stream contents is provided to the user.

In the distribution system 11, for carrying out the down-load of the stream contents from the contents server 4 and playback by sequentially acquiring URLs, when this URL is acquired, the start position and the end position of the important information set to the corresponding stream contents are notified with the time code which is the time information of the stream contents. Further, only in the case when the important information is carried out the playback as standard as intended by the distribution side, namely only in the case when the part to which the important information is assigned is carried out the playback with the normal playback speed by this time information, the URL for the following stream content is acquired by accessing the service server 13.

Thereby, the distribution system 11 is able to carry out the playback of following stream contents only in a case when the operation is done in the reception side as intended in the distribution side, and it is able to reflect the intention of the distribution side to the operation of the reception side.

### (1 - 3) Effect of the first embodiment

According to the above described construction, the time information is notified together with the URL of the stream contents, and the playback processing is watched, and only in the case where the operation in the reception side is done as intended by the distribution side, it is able to reflect the intention of the distribution side to the operation of the reception side by making it possible to carry out the playback of following stream contents.

In this case, the stream contents are arranged to be distributed by the stream distribution, and only in the case when the stream contents are carried out the playback as intended by the distribution side, the URL of the following stream content is notified, and only in the case when the operation in the reception side is surely done as intended by the distribution side, it is able to make the playback of the following stream content possible.

In addition, this time information is set by the time code which is the time information of the stream contents, so that it is able to watch the playback condition with a simple processing.

### (2) Second embodiment

In this embodiment, a distribution system distributes stream contents by a buffering distribution. In addition, the distribution system 21 related to this embodiment is the same as the distribution system 11 related to the first embodiment except that constructions of the service server and the client terminal are different, so that these constructions are explained by diverting Fig. 9.

In other words, in this embodiment, the service server 23 provides a list of the stream contents that are available for provision by the access from the client terminal 22, and in addition, by the access from the client terminal 22 based on this list, the URL table 15 for the corresponding stream contents is provided to the client terminal 22. Further by the request from the client terminal 22, the playback condition is received as required, then, authorizes the playback for each of the stream contents.

Corresponding to this, the client terminal 22 accesses the service server 23, and receives a list of the stream contents available for provision, and further acquires the URL table 15 by accessing the service server 23 in accordance with this list with an operation by a user. Further after down-loading all of the plural stream contents constructing one content by accessing the contents server 4 in accordance with the URL table 15, it sequentially carries out the playback of each of stream contents. In case of this playback, the client terminal 22 accesses the service server 23, notifies the playback condition of just before as necessary, and as the result, when a authorization for the playback is acquired from the service server 23, then carries out the playback of a following stream content. In other words, in this distribution system 21, as shown in Fig. 13, by the access of the service server 23 from the client terminal 22, the processing proceeds from a step SP61 to a step SP62, and a request of a web page from the client terminal 22 is accepted by the service server 23. By this request, in a continuing step SP63, the service server 23 issues web page contents introducing the contents available for provision, and the client terminal 22 displays this web page contents by a browser.

Continuingly in this distribution system 21, in a continuing step SP64, a user desired content is selected successively by the selection by a user in this web page content, and in a continuing step SP65, the corresponding URL table 15 is provided from the service server 23 by the access from the client terminal 22 based on this selection by the user.

Thereby, in this distribution system 21, in a continuing step SP66, the contents server 4 is sequentially accessed by the URL recorded on this URL table, and in a continuing step SP67, the stream contents recorded in the URL table 15 are sequentially down-loaded to the client terminal 22, and carried out the buffering.

In this way, when the buffering of the stream contents is completed, the client terminal 22, in a continuing step SP68, requests an authorization of the playback for the stream contents to the service server 23, and determines whether the authorization is acquired or not, in a continuing step SP69. When the authorization is acquired here, in this distribution system 21, a playback for a top of the stream contents among the stream contents being buffered by the client terminal 22 is started in a continuing step SP70.

When the playback of this stream contents is completed, the client terminal 22, in a following step SP71, determines whether the playback of all the stream contents is completed or not, and if a negation result is provided here, then the processing proceeds to a step SP72. In this case, in the client terminal 22, after the playback condition of the part to which the important information recorded in the URL table 15 is assigned is notified to the service server 23based on the playback history of the adjacent stream contents, then the processing returns to the step SP68.

In the distribution system 21, it is determined whether the part to which the important information is recorded is carried out the playback with a standard playback speed or not, namely, it is confirmed that this part is not carried out the playback with a fast-forward or skip, but carried out the playback with the standard playback speed, then the playback of a following stream content is authorized, but when not carried out the playback with the standard playback speed, then the playback for the following stream content is not authorized.

Thereby, in this distribution system 21, only the case when a user continues to carry out the playback of the commercial with the standard playback speed, the processing procedure of the steps SP68 - SP69 - SP70 - SP71 - SP72 - SP68 is repeated, and after the desired contents of the continuing stream contents are distributed, the processing proceeds to a step SP 73 from the step SP71, then the processing procedure ends. On the contrary, in the case where the commercial is carried out the playback with the fast-forward, the processing proceeds from the step SP 69 to the step SP 70, the processing procedure ends, and thereby, the playback for the following stream contents is stopped.

According to the construction as shown in Fig. 13, it is also able to reflect the intention of the distribution side to the operation of the reception side in the buffering distribution.

### (3) Other embodiments

In the above mentioned first embodiment, in the stream distribution, it is described in the case where it makes difficult the playback of the following stream content based on the determination of the client terminal side, but this invention is not limited to this, and the playback condition is notified to the service server, and the playback of the following stream content may be set to be difficult based on the determination of the service server.

Further in the above described second embodiment, in the buffering distribution, it is described in the case where the playback condition is notified to the service server, and the playback of the following stream content is set to be difficult based on the determination of the service server, but the present invention is not limited to this, like the first embodiment, the playback of the following stream content may be set to be difficult based on the determination of the client terminal side.

Further in the above described embodiment, it is described in the case where a part to which important information is assigned by the time information is notified, but the present invention is not limited to this, and these time information may be transferred by the setting of the flag in the stream contents and the like.

In addition, in the above mentioned embodiment, it is described about the case where the URL table and the time information are transmitted from the service server, but the present invention is not limited to this, and the time information may be transmitted together with the stream contents, and further, only the time information may be transmitted separately.

As described above, according to the present invention, it notifies the time information to a transmission target of the stream contents, watches a playback condition of a specified part at least by the time information, and only when the operation at a reception side is done as intended by a distribution side, the playback of the following stream content is authorized, and accordingly, it is possible to reflect the intention of the distribution side to the operation of the reception side.

### INDUSTRIAL APPLICABILITY

The present invention relates to a contents providing apparatus, a contents providing method, a playback program for stream contents, and a recording medium on which a playback program for stream contents is recorded, and is able to apply to the case where music and video are distributed through the internet, for example.

### EXPLANATION OF CODE

1, 11, 21 ...... distribution system, 2, 12, 22 ...... client terminal, 3, 13, 23 ......service server, 4, 24 ...... contents server, 15 ...... URL table

## Claims

1. In a contents providing apparatus that is made available for providing stream contents to a client terminal by a request from the client terminal, said contents distribution apparatus is **characterized in** which
said streams contents are formed by dividing one content with a time sequence; and
said contents providing apparatus notifies time information of a part to which important information is assigned in said stream contents to the client terminal.

2. The contents providing apparatus as cited in Claim 1, **characterized** wherein
a notification of a playback condition for one of said stream contents is accepted; and
in response to said notification of the playback condition, following stream contents are set to be available for playback.

3. The contents providing apparatus as cited in Claim 1, **characterized** wherein
said time information is set by a time code of the stream contents as a reference.

4. In a contents providing apparatus for receiving stream contents transmitted from a predetermined server and proving to a user by carrying out playback of the stream contents, said contents providing apparatus is **characterized in** which
said streams contents are formed by dividing one content with a time sequence; and
said contents providing apparatus watches a playback condition at a predetermined part specified at least by time information notified from said server; and stops the playback of following stream contents based on the playback condition.

5. The contents providing apparatus as cited in Claim 4, **characterized** wherein
the playback of said following stream contents is stopped by stopping acquisition of said following stream contents based on the playback condition.

6. The contents providing apparatus as cited in Claim 4, **characterized** wherein
said playback condition is notified to said server; and
the playback of said following stream contents is stopped by an instruction from said server.

7. The contents providing apparatus as cited in Claim 4, **characterized** wherein
said time information is set by a time code of the stream contents as a reference.

8. In a contents providing method that is made available for providing stream contents to a client terminal by a request from the client terminal, said contents distribution method is **characterized in** which
said streams contents are formed by dividing one content with a time sequence; and
said contents providing method notifies time information of a part in which important information is assigned in said stream contents to the client terminal.

9. In a contents providing method for receiving stream contents transmitted from a predetermined server and proving to a user by carrying out playback of the stream contents, said contents providing method is **characterized in** which
said streams contents are formed by dividing one content with a time sequence; and
said contents providing method watches the playback condition at a predetermined part specified at least by time information notified from said server, and stops the playback of following stream contents based on the playback condition.

10. In a playback program for carrying out playback of stream contents received from a predetermined server and providing to a user, said playback program for stream contents is **characterized in** which;
said streams contents are formed by dividing one content with a time sequence; and
said playback program for stream contents watches the playback condition at a predetermined part specified at least by time information notified from said server, and sets to make difficult the playback of following stream contents based on the playback condition.

11. In a recording medium on which a playback program for carrying out playback stream contents received from a predetermined server and proving to a user is recorded, said recording medium on which the playback program for the stream contents is recorded is **characterized in** which
said streams contents are formed by dividing one content with a time sequence; and
said playback program for the stream contents watches the playback condition at a predetermined part specified at least by time information notified from said server, and makes difficult the playback of following stream contents based on the playback condition.

## Amended claims

### Amended claims under Art. 19.1 PCT

**1.** (Amended) In a contents providing apparatus that is made available for providing stream contents to a client terminal by a request from the client terminal, said contents distribution apparatus is **characterized in** which
said streams contents are formed by dividing one content with a time sequence; and
said contents providing apparatus notifies URL and time information of a part to which important information is assigned in said stream contents to the client terminal.

**2.** The contents providing apparatus as cited in Claim 1, **characterized** wherein
a notification of a playback condition for one of said stream contents is accepted; and
in response to said notification of the playback condition, following stream contents are set to be available for playback.

**3.** The contents providing apparatus as cited in Claim 1, **characterized** wherein said time information is set by a time code of the stream contents as a reference.

**4.** (Amended) In a contents providing apparatus for receiving stream contents transmitted from a predetermined server and proving to a user by carrying out playback of the stream contents, said contents providing apparatus is **characterized in** which
said streams contents are formed by dividing one content with a time sequence; and
said contents providing apparatus watches a playback condition at a predetermined part specified at least by URL and time information notified from said server; and stops the playback of following stream contents based on the playback condition.

**2.** The contents providing apparatus as cited in Claim 4, **characterized** wherein
the playback of said following stream contents is stopped by stopping acquisition of said following stream contents based on the playback condition.

**6.** The contents providing apparatus as cited in Claim 4, characterized wherein
said playback condition is notified to said server; and
the playback of said following stream contents is stopped by an instruction from said server.

**7.** The contents providing apparatus as cited in Claim 4, **characterized** wherein
said time information is set by a time code of the stream contents as a reference.

**8.** (Amended) In a contents providing method that is made available for providing stream contents to a client terminal by a request from the client terminal, said contents distribution method is **characterized in** which
said streams contents are formed by dividing one content with a time sequence; and
said contents providing method notifies URL and time information of a part in which important information is assigned in said stream contents to the client terminal.

**9.** (Amended) In a contents providing method for receiving stream contents transmitted from a predetermined server and proving to a user by carrying out playback of the stream contents, said contents providing method is **characterized in** which
said streams contents are formed by dividing one content with a time sequence; and
said contents providing method watches the playback condition at a predetermined part specified at least by URL and time information notified from said server, and stops the playback of following stream contents based on the playback condition.

**10.** (Amended) In a playback program for carrying out playback of stream contents received from a predetermined server and providing to a user, said playback program for stream contents is **characterized in** which;
said streams contents are formed by dividing one content with a time sequence; and
said playback program for stream contents watches the playback condition at a predetermined part specified at least by URL and time information notified from said server, and sets to make difficult the playback of following stream contents based on the playback condition.

**11.** (Amended) In a recording medium on which a playback program for carrying out playback stream contents received from a predetermined server and proving to a user is recorded, said recording medium on which the playback program for the stream contents is recorded is **characterized in** which
said streams contents are formed by dividing one content with a time sequence; and
said playback program for the stream contents watches the playback condition at a predetermined part specified at least by URL and time information notified from said server, and makes difficult the playback of following stream contents based on the playback condition.

Statement under Art. 19.1 PCT
In claim 1, it is made clear that the contents are provided by dividing with a time sequence and URL and time information to which important information is assigned is notified to a client terminal, and thereby, the differences with regard to the cited documents are made clear.

In the document, JP2001-16928A (Sony Corporation), there is a description in which, that in a contents providing apparatus for providing stream contents, a CUE mark indicating commercial insertion to a program may be united with the program, and although it can be estimated that there is a description on a construction related to a construction where a part of the time information to which the important information is assigned is notified to the client terminal, there is no description on a construction for notifying the URL of this part.

In the document, EP891084A2 (General Instrument Corporation), there is a description in which, information related to specified contents are provided to a client terminal in on-demand system or the like, and although it can be estimated that there is a description on a construction related to a construction where a part of the time information to which the important information is assigned is notified to the client terminal, there is no description on a construction for notifying the URL of this part.

In the document, 2002-163141A (NTT Corporation), although there is disclosed a construction in which commercial information, by providing the contents building in the URL therein, is acquired by accessing a server separately by the URL, it is not that the contents themselves are provided by dividing with a time sequence and that the URL related to the important information of this contents, and further, there is not disclosed about provision of the time information.

The present invention is able to distribute following part after surely confirming the playback of the important part by this URL and the time information, and thereby, is obtained an effect that the intention of the distribution side is reflected to the operation of the reception side,

Claim 2 is to weight a requirement related to a specific providing method for the contents divided with a time sequence in the construction of Claim 1.

Claim 3 is to technically limit the time information in the construction of Claim 1.

Claim 4 is the invention of a client terminal apparatus side corresponding to Claim 1, it is to stop the playback of stream contents by watching a playback condition based on the time information, and thereby it is to obtain an effect that it is able to reflect the intention or the distribution side to the operation of the reception side.

Claim 5 is, in Claim 4, to technically limit a specific construction for stopping the playback of the stream contents.

Claim 6 and Claim 7 are inventions of the client terminal apparatus side corresponding to Claim 3 and Claim 4, respectively.

Claim 8 and Claim 9 are inventions of a contents providing method corresponding to Claim 1 and Claim 4, respectively.

Claim 10 and Claim 11 are inventions of a playback program for contents corresponding to Claim 4, and a recording medium to which such program is recorded.
